(19) Europäisches Patentamt
European Patent Office
Office européen des brevets

(11) Publication number: **0 108 946**
**B1**

(12) **EUROPEAN PATENT SPECIFICATION**

(45) Date of publication of patent specification: **23.12.87**

(51) Int. Cl.$^4$: **C 08 L 71/02,** C 08 L 101/00, C 08 F 299/02, C 08 F 283/06, C 09 J 3/14, C 09 D 3/74

(21) Application number: **83110356.9**

(22) Date of filing: **18.10.83**

(54) **Curing composition.**

(30) Priority: **20.10.82 JP 185277/82**
**27.10.82 JP 189432/82**
**28.12.82 JP 231749/82**
**23.06.83 JP 113882/83**
**29.07.83 JP 140084/83**

(43) Date of publication of application:
**23.05.84 Bulletin 84/21**

(45) Publication of the grant of the patent:
**23.12.87 Bulletin 87/52**

(84) Designated Contracting States:
**BE CH DE FR GB IT LI NL SE**

(56) References cited:
**EP-A-0 035 049**
**EP-A-0 050 249**

(73) Proprietor: **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor: **Hirose, Toshifumi**
**2-3, Kaminotani 7-chome**
**Suma-ku Kobe-shi Hyogo-ken (JP)**
Inventor: **Isayama, Katsuhiko**
**8-7, Tsukushigaoka 4-chome**
**Kita-ku Kobe-shi Hyogo-ken (JP)**
Inventor: **Kawakubo, Fumio**
**1-68-404, Nishiochiai 6-chome**
**Suma-ku Kobe-shi Hyogo-ken (JP)**
Inventor: **Takanoo, Miyako**
**6-532, Maikodai 6-chome**
**Tarumi-ku Kobe-shi Hyogo-ken (JP)**
Inventor: **Yukimoto, Sadao**
**634-2, Okuradani Shimizu**
**Akashi-shi Hyogo-ken (JP)**

(74) Representative: **Türk, Gille, Hrabal**
**Bruckner Strasse 20**
**D-4000 Düsseldorf 13 (DE)**

**EP 0 108 946 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a curing composition, and more particularly to a curing composition having improved weatherability and adhesive property which contains a polyether having at least one functional group in its molecule said functional group being selected from the group consisting of a reactive silicon-containing group and an olefin group, and a further polymer.

Polyethers having in the molecule at least one functional group such as a reactive silicon-containing group or an olefin group are disclosed, for instance, in Japanese Examined Patent Publication (Tokkyo Kokoku) No. 36319/1970, No.12154/1971 and No. 32673/1974 and Japanese Unexamined Patent Publication (Tokkyo Kokai) No. 156599/1975, No. 73561/1976, No. 6096/1979, No. 13767/1980, No. 13768/1980, No. 82123/1980, No. 123620/1980, No. 125121/1980, No. 131021/1980, No. 131022/1980, No. 135135/1980 and No. 137129/1980. It is known that these polyethers are curable by moisture and suitable for use in paints, adhesive, sealants, etc. However, these polyethers have drawbacks resulting from the structure of the main chain and a manner of bonding of the reactive silicon-containing functional group to the main chain. For instance, the polyether proposed in Japanese Unexamined Patent Publication No. 73561/1976 is poor in weatherability because of having urethane bonds in the main chains and the chain ends and also has a problem in workability because of a very high viscosity resulting from hydrogen bonds by urethane bonds. The polyether proposed in Japanese Unexamined Patent Publication No. 156599/1975 has a problem in weatherability resulting from hydrogen atoms bonding to tertiary carbon atoms of the polyether main chain.

Conventional pressure sensitive adhesives are classified roughly into rubber adhesive and acrylic resin adhesives. The rubber adhesives are superior in initial tackiness, but poor in weatherability and heat resistance. On the other hand, the acrylic adhesives are superior in weatherability and heat resistance, but poor in initial tackiness.

Curing compositions comprising a polymer having a polyether main chain and a hydrolysable silicon-containing group, and a photocurable substance which can be acrylic or methacrylic monomers and oligomers, or polyvinylcinnamate, are already known from EP—A—1 35 049. However, due to the presence of the photocurable substance, these composition are not always sufficient in their tackiness and therefore are not particularly useful as sealants and pressure-sensitive adhesives.

The present inventors already proposed a pressure sensitive adhesive composition containing as an effective component a specific polyether having a reactive silicon-containing group (Japanese Patent Application No. 181843/1982). It is reported that the composition is superior in both of the initial tackiness and the heat resistance, but the adhesive property to substrates or base materials and the weatherability are not always sufficient.

It is therefore an object of the present invention to provide a curing composition having excellent initial tackiness, heat resistance, adhesive property and weatherability.

A further object of the invention is to provide a curing composition containing a polyether curable to convert into a hard or rubber-like material, especially a rubber-like material, and being useful particularly as a sealant and a pressure sensitive adhesive.

These and other objects of the present invention will become apparent from the description hereinafter.

In accordance with the present invention, there is provided a curing composition which comprises (A) a polyether having at least one functional group in the molecule, said functional group being selected from the group consisting of a reactive silicon-containing group and an olefin group, and (B) a polymer selected from the group consisting of (a) an alkyl acrylate homopolymer in which said alkyl group has 2 to 14 carbon atoms, (b) an acrylate polymer obtained by polymerizing a monomer mixture containing at least 50% by mole of an alkyl acrylate in which said alkyl group has 2 to 14 carbon atoms, and (c) a polymer having at least one reactive silicon-containing group in one molecule obtained by polymerizing a polymerizable monomer, said reactive silicon-containing group being a silicon-containing group capable of condensing by or with moisture, a condensation catalyst or a cross-linking agent.

The composition of the present invention has an excellent weatherability and adhesive property as well as an excellent initial tackiness and heat resistance, and is useful as a pressure sensitive adhesive, a sealant and a paint.

It is necessary to employ as a component (A) a polyether having at least one reactive silicon-containing group and/or olefin group in the molecule. The polyether can contain both the reactive silicon-containing group and the olefin group. The term "reactive silicon-containing group" as used herein means a silicon-containing group capable of condensing or reacting by or with moisture or an additive such as a condensation catalyst or a cross-linking agent, e.g. a hydrolyzable bonding to silicon atom or silanol group.

The polyether (A) preferably has a molecular weight of 500 to 30 000.

According to a preferred embodiment of the invention the main chain of said polyether (A) consists essentially of recurring units of the general formula: $—R^4O—$ wherein $R^4$ is a bivalent hydrocarbon group having 1 to 4 carbon atoms.

According to another preferred embodiment of the invention the polymer (c) has been obtained from at least one vinyl monomer of the general formula (1):

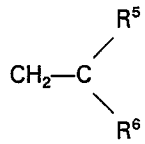 (1)

wherein $R^5$ is a hydrogen atom, a halogen atom or a monovalent aliphatic hydrocarbon group having 1 to 10 carbon atoms, and $R^6$ is a hydrogen atom, a halogen atom, a monovalent aliphatic hydrocarbon group having 1 to 10 carbon atoms, a monovalent aromatic hydrocarbon group having 6 to 10 carbon atoms, an alkenyl group, carboxyl group, an acyloxy group, an alkoxycarbonyl group, nitrile group, pyridyl group, amido group or glycidoxy group.

According to another preferred embodiment of the invention said vinyl monomer (1) is a monomer having the general formula (3):

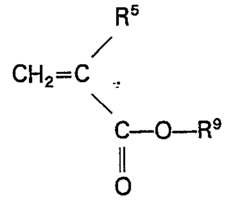 (3)

wherein $R^5$ is as defined in Claim 4, and $R^9$ is a monovalent hydrocarbon group having 1 to 20 carbon atoms.

According to a further preferred embodiment of the invention the polymer (c) has been obtained from a vinyl monomer of the general formula (2):

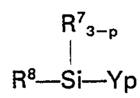 (2)

wherein $R^7$ is a monovalent hydrocarbon group having 1 to 10 carbon atoms selected from an alkyl group, an aryl group and an aralkyl group, $R^8$ is an organic residue having a polymerizable double bond, Y is a hydrolyzable group and p is an integer of 1 to 3.

According to a further preferred embodiment of the invention said vinyl monomer (2) is a monomer having the general formula (4):

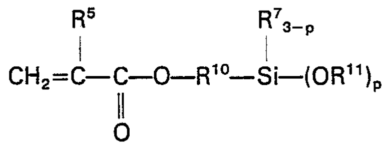 (4)

wherein $R^5$ is as defined in Claim 4, $R^7$ and p are as defined above, $R^{10}$ is a bivalent hydrocarbon group having 1 to 10 carbon atoms, and $R^{11}$ is a bivalent hydrocarbon group having 1 to 8 carbon atoms.

According to a further preferred embodiment of the invention the reactive silicon-containing group in polymer (B) is present at the polymer end.

Preferably the reactive silicon-containing groups of the polyether (A) and the polymer (B) are alkoxysilyl groups.

Preferably the polymer (B) is one prepared in the presence of said polyether (A).

Representative examples of the reactive silicon-containing group are, for instance, a group of the general formula (5):

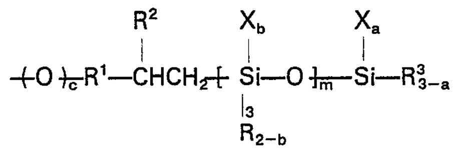 (5)

wherein $R^1$ is a bivalent organic group having 1 to 20 carbon atoms, $R^2$ is hydrogen or a monovalent organic group having 1 to 20 carbon atoms, $R^3$ is a monovalent hydrocarbon group or a triorganosiloxy group, "a" is 0, 1, 2 or 3, "b" is 0, 1 or 2, "c" is 0 or 1, provided $1 \leqq a + b \leqq 4$, X is silanol group or a hydrolyzable group and m is 0 or an integer of 1 to 18.

The polyether having such a silicon-containing functional group can be prepared, for instance, by addition reaction of a silicon hydride compound of the general formula (6):

$$H{-}\left[\underset{R^3_{2-b}}{\overset{X_b}{\underset{|}{\overset{|}{Si}}}}{-}O\right]_m{-}\overset{X_a}{\overset{|}{Si}}{-}R^3_{3-a} \qquad (6)$$

wherein $R^3$, X, a, b and m are as defined above, and a polyether having an olefin group of the general formula (7):

$$CH_2{=}\overset{R^2}{\overset{|}{C}}H{-}R^1{-}\!\left(O\right)_c \qquad (7)$$

wherein $R^1$, $R^2$ and c are as defined above, in the presence of a platinum compound as a catalyst, such as platinum black, chloroplatinic acid, a platinum alcohol compound, a platinum olefin complex, a platinum aldehyde complex or a platinum ketone complex.

In the above formula (5) or (6), $R^3$ is a monovalent hydrocarbon group, especially a monovalent hydrocarbon group having 1 to 20 carbon atoms, e.g. an alkyl group such as methyl or ethyl group, a cycloalkyl group such as cyclohexyl group, an aryl group such as phenyl group, and an aralkyl group such as benzyl group, and also includes a triorganosiloxy group of the general formula: $(R')_3SiO$— wherein R′ is a monovalent hydrocarbon group having 1 to 20 carbon atoms and the groups R′ may be the same or different. The hydrocarbon groups $R^3$ contained in the silicon hydride compound (6) may be the same or different. Also, the group X in the above formula (5) or (6) is silanol group or a hydrolyzable group such as a halogen, hydrogen, an alkoxyl group, an acyloxy group, a ketoxymate group, amino group, amido group, aminoxy group, mercapto group and an alkenyloxy group. The hydrolyzable groups contained in the silicon hydride compound (6) may be the same or different.

Typical examples of the silicon hydride compound (6) are, for instance, a halogenated silane such as trichlorosilane, methyldichlorosilane, dimethylchlorosilane or trimethylsiloxydichlorosilane; an alkoxysilane such as trimethoxysilane, triethoxysilane, methyldimethoxysilane, phenyldimethoxysilane or 1,3,3,5,5,7,7-heptamethyl-1,1-dimethoxytetrasiloxane; an acyloxysilane such as methyldiacetoxysilane or trimethylsiloxymethylacetoxysilane; a ketoxymatesilane such as bis(dimethylketoxymate)methylsilane, bis(cyclohexylketoxymate)methylsilane or bis(diethylketoxymate)trimethylsiloxysilane; a hydrosilane such as dimethylsilane, trimethylsiloxymethylsilane or 1,1-dimethyl-2,2-dimethyldisiloxane; an alkenyloxysilane such as methyltri(isopropenyloxy)silane. The silicon hydride compounds usable in the invention are not limited to the exemplified compounds.

In the preparation of the polyether having a reactive silicon-containing group by the process mentioned above, after reacting the silicon hydride compound (6) and the polyether having the olefin group (7), a part or all of the groups X can be further converted into other hydrolyzable groups or hydroxyl groups. For instance, in the case that the group X is a halogen atom or hydrogen atom, it is rather preferable for use to convert into an alkoxyl group, an acyloxy group, aminoxy group, an alkenyloxy group or hydroxyl group.

In the above formula (5) or (7), $R^2$ is hydrogen atom or a monovalent organic group having 1 to 20 carbon atoms, preferably hydrogen atom or a hydrocarbon group having 1 to 20 carbon atoms, more preferably hydrogen atom. Also, the group $R^1$ which is a bivalent organic group having 1 to 20 carbon atoms, is preferably a hydrocarbon group or a hydrocarbon group containing ether bond, ester bond, urethane bond or carbonate bond, and in particular, methylene group is preferred.

The polyether having the olefin group of the formula (7) can be prepared, for instance, by a process as disclosed in Japanese Unexamined Patent Publication No. 129247/1978 or No. 6097/1979, or by a process wherein an epoxy compound such as ethylene oxide or propylene oxide is copolymerized with an olefin-containing epoxy compound such as allyl glycidyl ether to introduce the olefin group into the side chain of the produced polyether.

The polyether having the olefin group (7) itself can also be employed as a component (A) in the present invention. Typical examples of the olefin group (7) are, for instance, $-OCH_2CH{=}CH_2$, $-OC(CH_3){=}CH_2$, $-OCH_2CH_2CH{=}CH_2$,

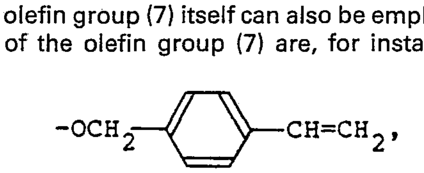

$-OCOCH_2CH{=}CH_2$ and $-OCOC(CH_3){=}CH_2$. The olefin groups (7) may be present at the end or side chain of the polymer.

The polyether having at least one functional group used as a component (A) in the present invention is a polymer of which the main chain has chemically linked recurring units shown substantially by the general formula: $-R^4O-$ wherein $R^4$ is a bivalent organic group, preferably a bivalent hydrocarbon group having 1 to 8 carbon atoms. The polyether (A) having the recurring units $-R^4O-$ wherein all or most of the group $R^4$ are a hydrocarbon group having 1 to 4 carbon atoms, is more preferable. Typical examples of the group $R^4$ are

—$CH_2$—, —$CH_2CH_2$—, —$CH(CH_3)$—$CH_2$—, —$CH(C_2H_5)$—$CH_2$—, —$C(CH_3)_2$—$CH_2$—, and —$CH_2CH_2CH_2CH_2$—. The —$CH(CH_3)$—$CH_2$— group is particularly preferred as the group $R_4$. The polyether (A) may contain one or more kinds of the recurring unit —$R^4O$—. The molecular weight of the polyether (A) is usually selected from 500 to 30,000, preferably from 3,000 to 15,000.

The polymer (B) prepared by polymerizing a polymerizable monomer may be a polymer obtained by polymerizing the polymerizable monomer in the presence of the polyether (A), or a usual polymer of the polymerizable monomer, namely a polymer obtained by polymerizing the polymerizable monomer in the absence of the polyether (A).

The polymerizable monomers used for the preparation of the component (B) include, for instance, a vinyl monomer of the general formula (1):

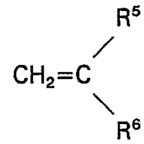

(1)

wherein $R^5$ is hydrogen atom, a halogen atom or a substituted or unsubstituted monovalent aliphatic hydrocarbon group having 1 to 10 carbon atom, and $R^6$ is hydrogen atom, a halogen atom, a substituted or unsubstituted monovalent aliphatic hydrocarbon group having 1 to 10 carbon atoms, a substituted or unsubstituted monovalent aromatic hydrocarbon group having 6 to 10 carbon atoms, an alkenyl group, carboxyl group, an acyloxy group, an alkoxycarbonyl group, nitrile group, pyridyl group, amido group or glycidoxy group, and a vinyl monomer of the general formula (2):

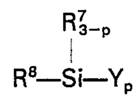

(2)

wherein $R^7$ is a monovalent hydrocarbon group having 1 to 10 carbon atoms selected from an alkyl group, an aryl group and an aralkyl group, $R^8$ is an organic residue having a polymerizable double bond, Y is a hydrolyzable group and p is an integer of 1 to 3. The hydrolyzable group Y is the same as defined above. The polymerizable monomers may be employed alone or in admixture thereof.

Preferable vinyl monomers (1) are those having the general formula (3):

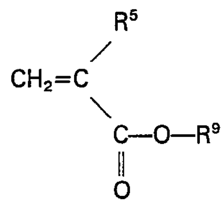

wherein $R^5$ is as defined above, and $R^9$ is a substituted or unsubstituted monovalent hydrocarbon group having 1 to 20 carbon atoms.

Preferable vinyl monomers (2) are those having the general formula (4):

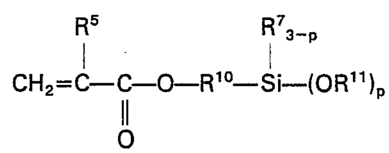

(4)

wherein $R^5$, $R^7$ and p are as defined above, $R^{10}$ is a bivalent hydrocarbon group having 1 to 10 carbon atoms, and $R^{11}$ is a substituted or unsubstituted bivalent hydrocarbon group having 1 to 8 carbon atoms.

Typical examples of the vinyl monomer (1) are, for instance, ethylene, propylene, isobutylene, butadiene, chloroprene, vinyl chloride, vinylidene chloride, acrylic acid, methacrylic acid, maleic anhydride, vinyl acetate, acrylonitrile, pyridine, styrene, chlorostyrene, 2-methylstyrene, divinylbenzene, methyl acrylate, ethyl acrylate, isobutyl acrylate, 2-ethylhexyl acrylate, 2-hydroxyethyl acrylate, benzyl acrylate, glycidyl acrylate, methyl methacrylate, ethyl methacrylate, isobutyl methacrylate, 2-ethylhexyl methacrylate, 2-hydroxyethyl methacrylate, benzyl methacrylate, glycidyl methacrylate, acrylamide, methacrylamide, and N-methylolacrylamide.

Typical examples of the vinyl monomer (2) are, for instance,

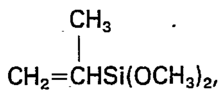, 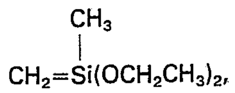, 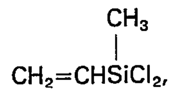, $CH_2{=}CHSi(OCH_3)_3$, $CH_2{=}CHSi(OCH_2CH_3)_3$,

$CH_2{=}CHSiCl_3$, 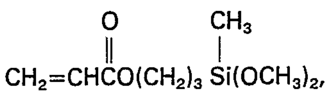, 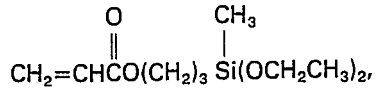, 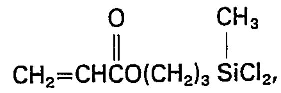,

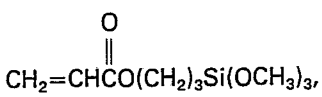, 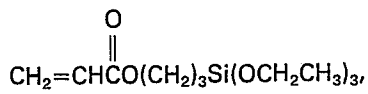, 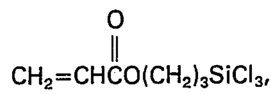,

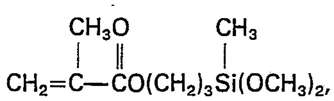, 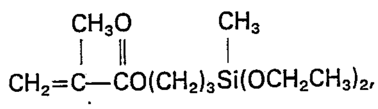, 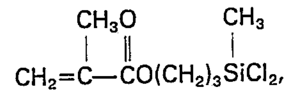,

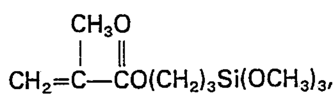, 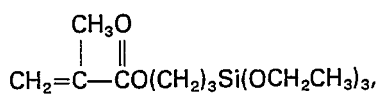, 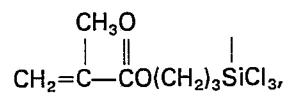,

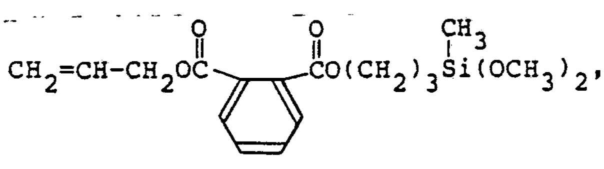, 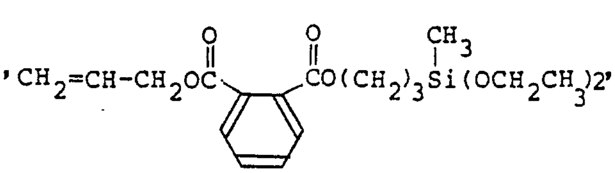

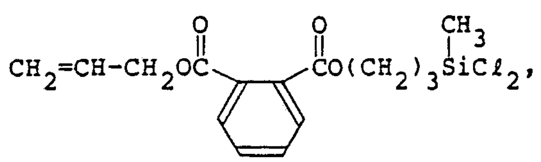, 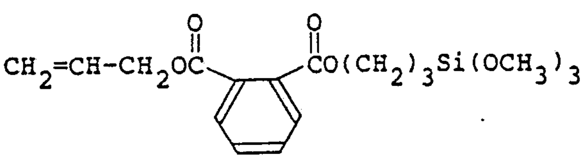,

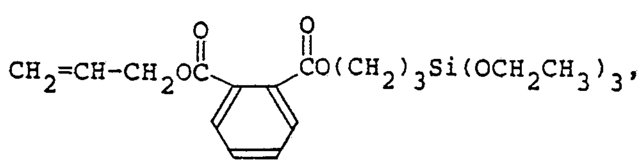, and 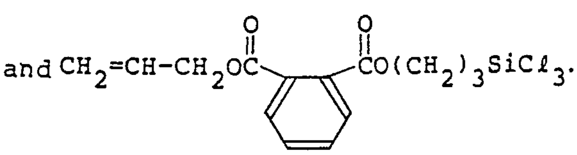.

Particularly $CH_2{=}C(CH_3){-}CO_2(CH_2)_3Si(OCH_3)_3$ is preferable.

The polymerizable monomers used for the preparation of the polymer (B) are suitably selected according to the purposes. For instance, in case that the improvement in the weatherability of the polyether (A) is desired, the use of the so-called acrylic monomer such as ethyl acrylate, isobutyl acrylate, methyl methacrylate or $CH_2{=}C(CH_3){-}CO_2(CH_2)_3Si(OCH_3)_3$ is preferable. Also, in case of improving the adhesive property, the use of acrylamide, an epoxy-containing vinyl monomer, 2-ethylhexyl acrylate or $CH_2{=}C(CH_3){-}CO_2(CH_2)_3Si(OCH_3)_3$ is preferable.

Although the polymerizable monomers may be employed alone or in admixture thereof, it is preferable to employ a monomer mixture containing at least 50% by mole of an acrylate having a $C_2$ to $C_{14}$ alkyl group, especially butyl acrylate and/or 2-ethylhexyl acrylate, from the viewpoint of the compatibility of the produced polymer (B) with the polyether (A) and the tackiness. The acrylate having a $C_2$ to $C_{14}$ alkyl group contributes to revelation of the tackiness as well as the polyether (A). Other polymerizable monomers are preferably employed as comonomers for the purpose of imparting the cohesive forth and the adhesive strength in an amount such that they do not exert a bad influence upon the compatibility with the polyether and the tackiness. In particular, the polymerizable silane compounds shown by the formula (2) and the vinyl monomers having a functional group such as acrylic acid, methacrylic acid and maleic anhydride have an effect of raising the cohesive forth and the adhesive strength with the copolymerization thereof in a small amount. In particular, the introduction of the polymerizable silane compound is preferable, since it can also form thermally stable siloxane cross-linkages by condensation with the silicon-containing functional group present in the polymer (A).

The polymerization for preparing the polymer (B) can be carried out by usual methods, for instance, a method using a radical polymerization initiator and a method utilizing irradiation of ultraviolet rays, X-rays or γ-rays. The radical initiators include, for instance, peroxides such as benzoyl peroxide, benzoyl

hydroperoxide, di-t-butyl peroxide, di-t-butyl hydroperoxide, acetyl peroxide, lauroyl peroxide and hydrogen peroxide, azo compounds such as azobisisobutylonitrile, persulfates, and peroxydicarbonates such as diisopropyl peroxydicarbonate.

Also, in case of using as a component (B) a polymer which has a reactive silicon functional group at the polymer end, the spacing between the cross-linking points formed at the time of curing reaction of the components (A) and (B) or by reaction of the fellow components (B) can be increased, whereby cured products having a high elongation can be obtained from the composition of the invention. Cured products having a high elongation can also be obtained by using the polyether (A) which has an excellent elongation characteristic in itself. Also, in case of using an acrylate polymer and/or a methacrylate polymer as a component (B), the composition of the invention provides a cured product having a further improved weatherability, since these polymers have a good weatherability in essence. Accordingly, the use of the acrylate and/or methacrylate polymers having a reactive silicon-containing group at the polymer end as a component (B) is also preferable.

The acrylate or methacrylate polymers having a reactive silicon-containing group at the polymer end which are usable as a component (B), can be prepared by various processes, e.g. (i) a process in which an acrylate or methacrylate monomer is polymerized in the presence of a radical polymerization initiator having a reactive silicon-containing group of the general formula (8):

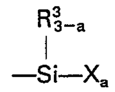

(8)

wherein $R^3$, X and "a" are as defined above, (ii) a process in which an acrylate or methacrylate monomer is polymerized in the presence of a radical polymerization chain transfer agent having the reactive silicon-containing group (8), (iii) a process in which an acrylate or methacrylate monomer is polymerized in the presence of both of the initiator and the chain transfer agent used in the above processes (i) and (ii), and (iv) a process in which an acrylate or methacrylate monomer is polymerized in the presence of a radical polymerization initiator having a functional group (C) such as carboxyl group, hydroxyl group, a halogen atom, amino group or epoxy group and/or a radical polymerization chain transfer agent having the functional group (C) to produce a polymer having at the polymer end the functional group (C) which may be further reacted with a polyfunctional compound such as a triisocyanate to produce a polymer having a functional group (C'), and then the functional group (C) or (C') is reacted with a silicon compound having both the reactive silicon-containing group (8) and a functional group (D) capable of reacting with the functional group (C) or (C') such as isocyanate group, carboxyl group, hydroxyl group, a halogen, amino group, epoxy group, mercapto group or acryloyloxy group. For instance, processes for preparing a polymer having the functional group (C) are disclosed in detail in Japanese Examined Patent Publication No. 17437/1971 and No. 38740/1978 and Japanese Unexamined Patent Publication No. 64242/1978 and No. 69206/1983. Also, as a process for producing a polymer having the functional group (C'), there is exemplified a process in which the functional group (C) such as carboxyl group, hydroxyl group or amino group is reacted with a polyisocyanate compound such as toluene diisocyanate to produce a polymer having the functional group (C') containing isocyanate group. However, the preparation of polymers having the functional group (C) or (C') is not limited to these processes.

Azo and peroxide compounds are employed as radical polymerization initiators having the silicon functional group (8).

Preferable azo radical polymerization initiators are compounds of the general formula (9):

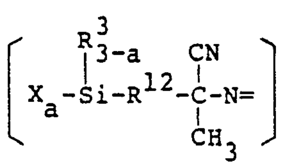

(9)

wherein $R^3$, X and "a" are as defined above, and $R^{12}$ is a bivalent hydrocarbon group having 2 to 18 carbon atoms. In particular, the compounds of the formula (9) wherein X is an alkoxy group such as methoxy group or ethoxy group, are preferable. Typical examples of such azo initiators are, for instance,

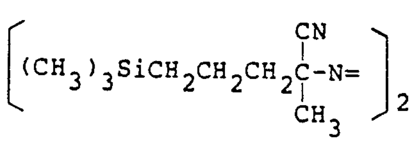,

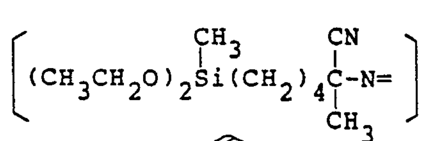,

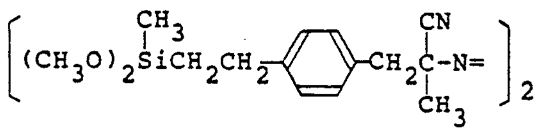,

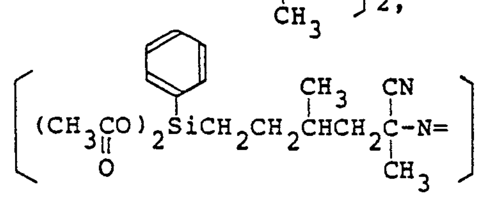,

azobis-2-(6-methyldimethoxysilyl-2-cyanohexane),

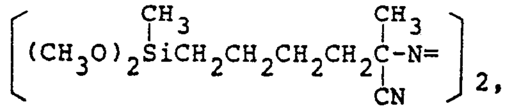

azobis-2-(6-trimethoxysilyl-2-cyanohexane, azobis-2-(6-methyldiacetoxysilyl-2-cyanohexane), and the like. The azo initiators used in the present invention are not limited to the above exemplified compounds.

Typical examples of the peroxide radical polymerization initiators are, for instance,

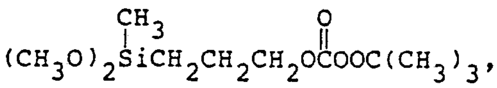 , 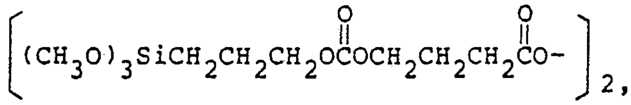

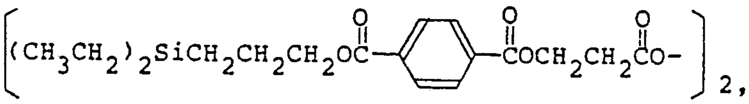

and the like. The peroxide initiators used in the invention are not limited to the above exemplified compounds.

The radical polymerization chain transfer agents having the silicon functional group (8) used in the present invention include, for instance, a compound of the general formula (10):

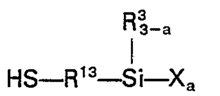 (10)

wherein $R^3$, X and "a" are as defined above, and $R^{13}$ is a bivalent hydrocarbon group having 1 to 18 carbon atoms, and a compound of the general formula (11):

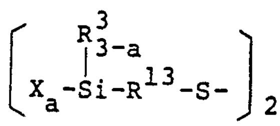 (11)

wherein $R^3$, $R^{13}$, X and "a" are as defined above. Typical examples of the group $R^{13}$ are methylene, ethylene, propylene, butylene, hexylene, phenylene and cyclohexylene. As the group X, an alkoxy group such as methoxy group or ethoxy group is particularly preferable from the viewpoint of easiness in handling. Representative examples of the chain transfer agents shown by the general formulas (10) and (11) are, for instance, $(CH_3O)_3SiCH_2CH_2CH_2SH$, $[(CH_3O)_3SiCH_2CH_2CH_2S—]_2$,

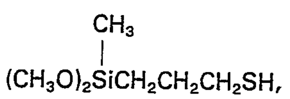 , 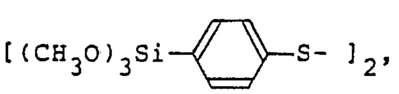 , $(CH_3COO_2)(C_6H_5)SiC_8H_{16}SH$,

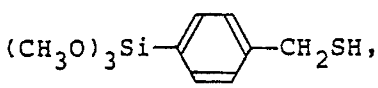

and the like.

In the preparation of the component (B), a solvent may be employed, as occasion demands. Solvents inert to both of the polyether (A) and the monomer to be polymerized are preferable, and include, for instance, ethers, hydrocarbons, acetic acid esters, and the like. The polymerization temperature is not particularly limited. In case of carrying out the polymerization by means of a radical initiator, the optimum polymerization temperature is selected according to the kind of the initiator used, usually from 50° to 150°C. As occasion demands, it is possible to use a chain transfer agent such as mercaptan compounds or halogen-containing compounds for the purpose of adjusting the degree of polymerization. The monomer to be polymerized may be introduced to a polymerization vessel all at once, or may be introduced intermittently or continuously for the purpose of controlling generation of heat, or the like.

The mixing ratio of the component (A) and the component (B) in the curable composition of the present invention varies depending on the composition and molecular weight of the polymer (B), and usually selected from 100/1 to 1/100 by weight. In case of polymerizing the polymerizable monomer in the presence of the component (A), the product itself can be used as an effective component for the composition of the invention without mixing the components (A) and (B). In that case, the ratio of the component (A) to the monomer which forms the component (B) is also selected from the same range as above.

The polymers obtained by polymerizing the above-mentioned vinyl monomer (1), vinyl monomer (2) or the combination thereof in the presence of the polyether (A) having at least one reactive silicon functional group in one molecule, are novel polymers. The present inventors also found that the products obtained by polymerizing the vinyl monomer (1), the vinyl monomer (2) or the combination thereof in the presence of a polymer having at least one reactive silicon functional group in one molecule, the main chain of which consists essentially of a polyester, an ether-ester block copolymer or a vinyl polymer, are also useful as an effective component of the curing composition of the present invention. The thus obtained polymers are also novel. These novel polymers can be prepared by usual polymerization method, e.g. a method utilizing irradiation of ultraviolet rays, X-rays or γ-rays and a method using a radical polymerization initiator such as a peroxide, an azo compound, a persulfate or a peroxydicarbonate. The polymers having at least one reactive silicon group can be obtained by known methods, e.g. a method as disclosed in Japanese Unexamined Patent Publication No. 6097/1979, and may be used alone or in admixture thereof. A mixture of at least 50% by weight of such polymers and other polymers may also be used in the preparation of the above novel polymers. As other polymers, there can be employed any known organic polymers having no reactive silicon functional group and other polymers having a reactive silicon functional group than the above-mentioned silicon-containing polyether, polyester, polyether-polyester block polymer and vinyl polymer. The molecular weight of the polymers used as starting materials is usually selected from 300 to 30,000. In the polymerization of a polymerizable monomer in the presence of the polyether (A) having a reactive silicon functional group and/or an olefin group, the before-mentioned radical polymerization initiator having a reactive silicon functional group and/or chain transfer agent having a reactive silicon functional group may also be employed, whereby the reactive silicon functional group can be introduced into the obtained product.

The curing composition of the present invention may contain various other additives, as occasion demands.

In case of preparing the curing composition intended for use as a sealing material, there may be incorporated in the composition, plasticizer, filler, reinforcement, antisagging agent, coloring agent, age resister, adhesion accelerator, curing catalyst and modifier for adjusting physical properties.

Examples of the plasticizer which is used, for instance, for adjusting the physical and other properties of the cured product, are a phthalate such as dibutyl phthalate, diheptyl phthalate, di(2-ethylhexyl)phthalate, butylbenzyl phthalate or butylphthalylbutyl glycolate; a non-aromatic dibasic acid ester such as dioctyl adipate or dioctyl sebacate; a polyalkylene glycol ester such as diethylene glycol dibenzoate or triethylene glycol dibenzoate; a phosphoric acid ester such as tricresyl phosphate or tributyl phosphate; a chlorinated paraffin; a hydrocarbon oil such as an alkyl diphenyl or a partially hydrogenated terphenyl, and the like. The plasticizers may be employed alone or in admixture thereof. Also, the plasticizers may be added at the time of preparing the polymers.

As fillers and reinforcements, there are employed usual fillers and reinforcements, e.g. heavy and light calcium carbonate, calcium carbonate surface-treated with a fatty acid, resin acid or a cationic or anionic surface active agent, magnesium carbonate, talc, titanium dioxide, barium sulfate, alumina, metal powder such as aluminum, zinc or iron, bentonite, kaolin, clay, silica, quartz powder, and carbon black. These fillers and reinforcements may be employed alone or in admixture thereof. In particular, it is possible to obtain a sealing material having an excellent transparency by using a filler or reinforcement capable of providing a transparency such as silica.

Examples of the antisagging agent are, for instance, a hydrogenated castor oil derivative, and a metal soap such as calcium stearate, aluminum stearate or barium stearate.

Usual inorganic pigments, organic pigments and dyes can be used in the present invention.

The modifier for adjusting the physical properties is useful, for instance, for raising the hardness of the cured product or for lowering the hardness to provide the cured product with the elongation. Examples of the modifier are, for instance, various silane coupling agents, e.g. an alkylalkoxysilane such as methyltrimethoxysilane, dimethyldimethoxysilane, trimethylmethoxysilane or n-propyltrimethoxysilane, an alkylisopropenoxysilane such as dimethyldiisopropenoxysilane, methyltriisopropenoxysilane or γ-glycidoxypropylmethyldiisopropenoxysilane, an alkoxysilane having a functional group such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)-aminopropylmethyldimethoxysilane, γ-mercaptopropyltrimethoxysilane or γ-mercaptopropylmethyldimethoxysilane; silicone varnishes; and polysiloxanes.

The polymers themselves used in the present invention have a good adhesive property to materials such as glasses, ceramics and metals, and also it is possible to provide the composition with a good adhesive property to a wide range of materials by incorporation of various primers. Accordingly, though the use of the adhesion accelerator is not always necessary, the adhesive property of the composition to various kinds of materials can be further improved by incorporation of one or more kinds of the adhesion accelerators such as epoxy resins, phenol resins, various silane coupling agents and aromatic polyisocyanates.

Examples of the curing catalyst are, for instance, a titanate such as tetrabutyl titanate or tetrapropyl titanate; an organo tin compound such as dibutyl tin dilaurate, dibutyl tin diacetate, tin octylate or tin naphthenate; lead octylate; an amine compound such as butylamine, octylamine, dibutylamine,

monoethanolamine, diethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6,-tris(dimethylaminomethyl)phenol, morpholine, N-methylmorpholine or 1,3-diazabicyclo(5,4,6)undecene-7, and a salt thereof with a carboxylic acid; a low molecular polyamide obtained by the reaction of an excess polyamine with a polybasic acid; a reaction product of an excess polyamine with an epoxy compound; a silane coupling agent having amino group, e.g. a known silanol condensation catalyst such as γ-aminopropyltrimethoxysilane or N-(β-aminoethyl)aminopropylmethyldimethoxysilane; and the like. The curing catalysts may be employed alone or in admixture thereof.

A solvent may be added to the composition of the invention for the purpose of improving the workability or lowering the viscosity, e.g. an aromatic hydrocarbon solvent such as toluene or xylene; an ester solvent such as ethyl acetate, butyl acetate, amyl acetate or an acetic acid ester of ethylene glycol ether; a ketone solvent such as methyl ethyl ketone, methyl isobutyl ketone or diisobutyl ketone. These solvents may also be used at the time of preparing the polymer.

Usual antioxidants and ultraviolet absorbents can be used as age resisters in the invention.

The curing composition of the invention intended for use as sealing material may be prepared as a one component moisture-curable type. In that case, the composition containing all ingredients is stored in a sealed container. The applied composition hardens by moisture in air. Alternatively, the composition of the invention may be prepared as a two component type. In that case, a hardener composition containing a curing catalyst, a filler, a plasticizer aand water is separately prepared, and a polymer composition is admixed with the hardener composition before use.

In case of preparing the one component composition, it is preferable that ingredients containing water are used after dehydrating or drying, or blending of ingredients is conducted while dehydrating by reducing the pressure or other means. In case of a two component curing composition, a trouble of gellation is little even if the additives contain a slight amount of water, since it does not contain a curing catalyst. However, when the storage stability for a long term is required, it is desirable to dry the additives to dehydrate. For the dehydration and drying, there are preferably adopted a heat drying method for solid additives, for instance, in the form of powder, and a reduced pressure dehydration method or a dehydration method using synthetic zeolite, activated alumina or silica gel for liquid additives. Water in the composition may also be removed by incorporating a small amount of an isocyanate compound, thereby causing water to react therewith to dehydrate. In addition to the above dehydration and drying methods, it is effective for further improving the storage stability of the composition to add a lower alcohol such as ethanol or methanol, or an alkoxysilane such as γ-mercaptopropylmethyldimethoxysilane or γ-glycidoxypropyltrimethoxysilane.

The curing composition intended for use as a pressure sensitive adhesive can also be prepared in the same manner as above. That is to say, the additives as used for the preparation of a sealing material such as curing catalyst, age register, plasticizer, reinforcement, modifier for adjusting physical properties and solvent may be used, as occasion demands. In some cases, other known additives used in usual pressure sensitive adhesive compositions may also be added, e.g. phenol resin, xylene resin, cumarone resin, petroleum resin, terpene resin, terpene-phenol resin, and the like. The pressure sensitive adhesive composition of the present invention can be applied to various materials such as tapes, sheets, labels and foils. For instance, the composition of solvent type, emulsion type or hot melt type is coated onto substrates such as synthetic resin or modified natural resin films, papers, all kinds of cloths, metal foils, metallized plastic films, and asbestos or glass fiber cloths, and is exposed to moisture or water to cure at ordinary temperature or with heating.

The uses of the curing composition of the present invention are not limited to a sealing material and a pressure sensitive adhesive, but it can also be employed as a paint, an adhesive, a modifier, a foam material, a water proofing material, a spraying material, and a rubber material.

The present invention is more specifically described and explained by means of the following Examples, in which all % and parts are by weight unless otherwise noted.

Also, Reference Examples are presented below to illustrate the preparation of the components (A) and (B) used in the present invention.

## Reference Example 1

A pressure reactor equipped with a stirrer was charged with 800 g. of polypropylene oxide having allyl ether groups at 97% of the total polymer ends and an average molecular weight of 8,000 (which was prepared by employing polypropylene oxide as a starting material). To the reactor were added 15 g. of methyldimethoxysilane and then 0.34 ml. of a solution of chloroplatinic acid catalyst prepared by dissolving 8.9 g. of $H_2PtCl_6{\cdot}6H_2O$ in 18 ml. of isopropanol and 160 ml. of tetrahydrofuran, and the reaction was carried out at 80°C. for 6 hours. As a result of determination of the residual hydrosilyl group by infrared spectrophotometry, it was found that most of the silane compound were reacted, thus it was confirmed that polypropylene oxide having

$$(CH_3O)_2{-}\overset{\displaystyle CH_3}{\overset{|}{Si}}{-}CH_2CH_2CH_2O{-}$$ group at the polymer end was obtained.

Reference Example 2

A pressure reactor equiped with stirrer was charged with 900 g. of polypropylene oxide having allyl ether groups at 96% of the total polymer ends and an average molecular weight of 9,000 (which was prepared by employing a mixture of 90% of polypropylene oxide and 10% of a triol type polypropylene oxide as a starting material). To the reactor were added 60 g. of a silicon compound of the following formula:

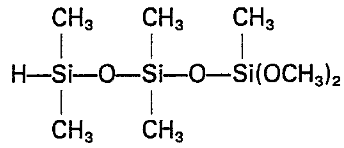

and 0.34 ml of the same chloroplatinic acid catalyst solution as used in Reference Example 1 in that order. The reaction was carried out at 80°C. for 6 hours to produce a polypropylene oxide having the end group of the following formula:

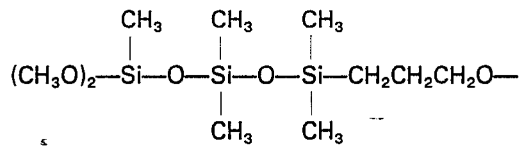

Reference Example 3

The procedure of Reference Example 1 was repeated except that 12 g. of trimethoxysilane was employed instead of methyldimethoxysilane, to produce a polypropylene oxide having $(CH_3O)_3SiCH_2CH_2CH_2O$— group at the polymer end.

Example 1

A reactor was charged with 100 parts of butyl acrylate, 150 parts of toluene and 0.5 part of benzoyl peroxide, and the reaction was carried out at 80°C. for 8 hours under a nitrogen atmosphere with stirring to give a solution of an acrylate polymer.

To 100 parts of the silyl group-containing polyether obtained in Reference Example 1 or 2 was added 50 parts of the butyl acrylate polymer solution obtained above. After uniformly admixing, 2 parts of dibutyl tin maleate was added to the mixture and uniformly admixed to give an adhesive composition in the form of a solution.

Each of the thus obtained two compositions was applied to a transparent polyester film having a thickness of 25 µm., and was dried at 130°C. for 3 minutes, thereby simultaneously causing the polymers to cross-link. The films were transparent and tacky and had a thickness of about 40 µm.

Example 2

A solution of an acrylic polymer was prepared in the same manner as in Example 1 except that the reactor was charged with 95 parts of 2-ethylhexyl acrylate, 3 parts of acrylic acid, 2 parts of vinyl acetate, 0.5 part of benzoyl peroxide and 150 parts of toluene.

To 100 parts of the silyl group-containing polyether obtained in Reference Example 3 was added 80 parts of the acylic polymer solution. After uniformly admixing, 2 parts of dibutyl tin dilaurate was added to and admixed uniformly with the mixture to give an adhesive composition in the form of a solution.

The composition was applied to a transparent polyester film having a thickness of 25 µm., and was heated at 130°C. for 3 minutes to simultaneously conduct drying and cross-linking, thus giving an adhesive film having a transparency, a tackiness and a thickness of about 60 µm.

The thus obtained pressure sensitive adhesive film with the polyester film was laminated onto a stainless steel plate, and was subjected to a 180° peeling test (rate of tension: 300 mm./minute). The adhesive did not remain on the stainless steel plate, and also peeling between the polyester film and the adhesive film was not observed. The adhesive strength measured at that time was 450 g./25 mm. The cohesive strength (static load 1,000 g., at 30°C.) was good, i.e. 0 mm./15 min. The initial tackiness (measured by J. Dow type ball tack measuring method) was 18 at 30°C. and 10 at 0°C., thus it was observed that the pressure sensitive adhesive had a good low temperature characteristic.

Example 3

A small amount of trilene diisocyanate was added to an adhesive composition in the form of a solution obtained by copolymerizing 85 parts of 2-ethylhexyl acrylate, 5 parts of acrylic acid and 10 parts of vinyl acetate in 150 parts of toluene in a usual manner. The composition was applied to a polyester film having a thickness of 25 µm. and dried at 130°C. for 3 minutes to form a tacky film having a thickness of about 40 µm. The initial tackiness of the thus obtained adhesive film measured by the same method as in Example 2 was 14 at 30°C. and 2 at 0°C.

On the other hand, 40 parts of the silyl group-containing polyether obtained in Reference Example 3 was added to and uniformly dissolved in 100 parts of the composition obtained above. After adding 2 parts of the reaction product of dibutyl tin oxide and dioctyl phthalate, the mixture was applied to a polyester film having a thickness of 25 µm. and dried at 130°C. for 10 minutes to form a tacky film having a thickness of about 40 µm. The thus obtained adhesive film had initial tackinesses of 17 at 30°C. and 8 at 0°C. and a cohesive strength of 0 mm./15 min. (static load 1,000 g., at 30°C.).

Comparative Example 1

To 100 parts of the silyl group-containing polyether obtained in Reference Example 3 was added 2 parts of dibutyl tin maleate. After uniformly admixing, the mixture was applied to a 25 µm. thick polyester film in a thickness of 60 µm. and cured by heating at 130°C. for 3 minutes. The formed film with the polyester film was laminated onto a stainless steel plate and was subjected to the 180° peeling test (rate of tension: 300 mm./minute). The adhesive strength was 45 g./25 mm.

Comparative Example 2

To 100 parts of the silyl group-containing polyether obtained in Reference Example 3 were added 240 parts of a 50% toluene solution of a terpene-phenol resin (commercially available under the commercial name "YS Polystar T—115" made by Yasuhara Yushi Kogyo Co., Ltd.) and 2 parts of dibutyl tin dilaurate, and uniformly admixed to give an adhesive composition in the form of a solution. The composition was applied to a transparent polyester film having a thickness of 25 µm., and heated at 130°C. for 3 minutes to simultaneously conduct drying and cross-linking, thus giving a transparent tacky film having a thickness of 60 µm. The thus obtained film was laminated onto a stainless steel plate and was subjected to the 180° peeling test. There was observed a contamination phenomenon such that a part of the adhesive film peeled off from the polyester film and remained on the stainless steel adherend.

Reference Example 4

The ingredients shown in Table 1 were admixed and uniformly dissolved with stirring, and 25 g. of the obtained mixture was placed in a 200 ml. four necked flask equipped with a condenser and replaced with a dry nitrogen gas, and was heated at 30°C. in a nitrogen stream on an oil bath. The polymerization began to start several minutes after and heat generated. After the heat generation became calm, the remaining mixture was gradually added dropwise to the flask through a dropping funnel over 3 hours. The polymerization was finished at the time when no heat generation was observed, to give a polymer.

The obtained polymer had a viscosity of 490 poises at 20°C. and an average molecular weight of 6,000 measured by gel permeation chromatography. The average number of reactive silicon-containing functional groups included in one polymer molecule (obtained by calculation based on the average molecular weight and the amount of the reactive silicon functional group-containing monomer charged) was 2.4.

Reference Examples 5 to 8

The procedures of Reference Example 4 were repeated by employing the ingredients shown in Table 1 to give polymers.

The results are shown in Table 1.

In Table 1, "Cat-1" shows a polymerization initiator of the formula:

$$(CH_3O)_2\underset{\underset{CH_3}{|}}{Si}CH_2CH_2CH_2O\underset{\underset{O}{\|}}{C}OOC(CH_3)_3.$$

TABLE 1

| | Composition (g.) | | | | | Polymer | |
|---|---|---|---|---|---|---|---|
| Ref. Ex. No. | Acrylate monomer | Acrylate comonomer | Reactive silicon functional group-containing monomer | Chain transfer agent | Initiator | Average molecular weight | Number of reactive silicon functional groups per molecule |
| 4 | Butyl acrylate (100) | — | — | γ-Mercapto-propyl-methyl-dimethoxy-silane (3.6) | Azobis-2-(6-methyl-dimethoxy-silyl-2-cyano-hexane (5.1) | 6000 | 2.4 |
| 5 | 2-Ethyl-hexyl acrylate (80) | Vinyl acetate (20) | Vinyltrimethoxy-silane (1.0) | γ-Mercapto-propyltri-ethoxy-silane (2.4) | Azobis-2-(6-methyl-diethoxy-silyl-2-cyano-hexane (4.8) | 8500 | 2.7 |
| 6 | Heptyl acrylate (100) | — | γ-Methacryloyloxy-propyltrimethoxy-silane (2.5) | — | Cat-1 (2.8) | 12200 | 2.3 |

TABLE 1 CONTINUED

| | Composition (g.) | | | | | Polymer | |
|---|---|---|---|---|---|---|---|
| Ref. Ex. No. | Acrylate monomer | Acrylate comonomer | Reactive silicon functional group-containing monomer | Chain transfer agent | Initiator | Average molecular weight | Number of reactive silicon functional groups per molecule |
| 7 | Butyl acrylate (100) | — | γ-Methyacryloyloxy-propylmethyl-dimethoxysilane (1.5) | γ-Mercapto propyl-methy-dimethoxy-silane (3.6) | α,α′-Azobis-isobutyro-nitrile (2) | 6200 | 1.5 |
| 8 | Butyl acrylate (100) | Acrylic acid (0.5) | — | 2-Mercapto-acetic acid (3.5) | α,α′-Azobis-isobutyro-nitrile (0.5) | 6500 | — |

## Reference Example 9

A flask equipped with a stirrer were charged with 60 g. of the polymer obtained in Reference Example 8, 1.2 g. of γ-isocyanatepropyltrimetoxysilane and 0.1 g. of dibutyl tin dilaurate, and the reaction was carried out at 100°C. for 5 hours in a nitrogen stream with stirring. The reaction of the terminal carboxyl groups of the polymer and the isocyanate group occurred, thus a polymer having trimethoxysilyl functional groups was obtained. The number of reactive silicon functional groups included in one polymer molecule (obtained by calculation based on the average molecular weight and the amount of the charged reactive silicon functional group-containing monomer) was 1 on the average.

## Reference Example 10

A flask equipped with a stirrer were charged with 300 g. of polypropylene glycol having an average molecular weight of 3,000, 26 g. of toluenediisocyanate and 0.2 g. of dibutyl tin dilaurate, and the reaction was carried out at 100°C. for 5 hours in a nitrogen stream with stirring. To the flask was added 16.3 g. of γ-aminopropylmethyldimethoxysilane, and was further reacted at 100°C. for 3 hours with stirring to give a polymer having an average molecular weight of about 6,500 and terminal methyldimethoxysilyl group.

## Examples 4 to 8

A polypropylene oxide having an average molecular weight of about 8,000 and silyl end groups [80% of the total end groups being a reactive silicon functional group of the formula: $(CH_3O)_2Si(CH_3)CH_2CH_2CH_2O—$] was admixed with each of the acrylate polymers obtained in Reference Examples 4 to 7 and 9 in a ratio shown in Table 2. To 100 g. of each of the obtained mixtures were added 20 g. of dioctyl phthalate, 20 g. of rutile titanium dioxide, 100 g. of calcium carbonate treated with a fatty acid and 0.3 g. of styrenated phenol, and mixed by a three roller paint mill to give a paste. After adding 2 g. of dibutyl tin dilaurate and 1 g. of laurylamine to the paste and thoroughly mixing, the paste was poured into a frame having a depth of 3 mm. and cured in a dryer at 23°C. and 55% RH for 7 days and then at 50°C. for 7 days to give a cured sheet.

The obtained cured sheets were punched to give No. 3 dumbbell specimens provided in Japanese Industrial Standard (JIS) K 6301, and the specimens were subjected to a tensile test (rate of tension: 500 mm./minute) using a universal testing machine to measure the elongation at break and tensile strength at break. Also, the weatherability of the cured sheets were measured by placing them in a sunshine weather-o-meter and observing the state of the deterioration of the sheet surface. The weatherability was estimated by the naked eye according to the following criteria.

○: No abnormality
△: Hair cracks
×: Large cracks

The results are shown in Table 2.

## Comparative Example 3

A cured sheet was prepared in the same manner as in Example 4 except that only the polypropylene oxide having the silyl end groups was employed without employing the acrylate polymer.

The results are shown in Table 2.

TABLE 2

| | Components (A) and (B) in curing composition (g.) | | Properties of cured product | | | | | | | |
|---|---|---|---|---|---|---|---|---|---|---|
| | (A) | (B) | Elongation at break (%) | Tensile strength ($kg/cm^2$) | Weatherability (hour) 250 | 500 | 750 | 1000 | 1500 | 2000 |
| Ex. 4 | 30 | Polymer of Ref. Ex. 4 (70) | 680 | 5.8 | ○ | ○ | ○ | ○ | △ | △ |
| Ex. 5 | 70 | Polymer of Ref. Ex. 5 (30) | 570 | 6.2 | ○ | ○ | ○ | △ | △—× | △—× |
| Ex. 6 | 40 | Polymer of Ref. Ex. 6 (60) | 630 | 5.6 | ○ | ○ | ○ | ○ | △ | △ |
| Ex. 7 | 60 | Polymer of Ref. Ex. 7 (40) | 580 | 6.5 | ○ | ○ | ○ | △ | △ | △—× |
| Ex. 8 | 80 | Polymer of Ref. Ex. 9 (20) | 560 | 7.2 | ○ | ○ | △ | △ | △—× | × |
| Com. Ex. 3 | 100 | — | 660 | 5.7 | ○ | △ | △—× | × | — | — |

As understood from Table 2, curing compositions prepared by mixing a polyether having silyl groups with an acrylate polymer having silyl end groups according to the present invention can provide cured products having an improved weatherability as well as elongation and tensile strength maintained high.

Example 9

A cured sheet was prepared in the same manner as in Example 7 except that the polymer obtained in Reference Example 10 was employed as a component (A), and the properties thereof were measured.

The cured sheet had high elongation and tensile strength, i.e. an elongation at break of 460% and a tensile strength at break of 9.4 kg./cm.$^2$, and also had a good weatherability such that in the weathering test, no abnormality was observed after 1,000 hours and slight hair cracks were merely observed after 1,500 hours.

Example 10

There were blended 10 g. of the polypropylene oxide having silyl end groups used in Example 4 and 10 g. of polybutyl acrylate having reactive silicon functional groups obtained in Reference Example 4, and to the blend were added 10 g. of a terpene-phenol resin having a softening point of 115°C. and 10 g. of toluene to give a polymer solution.

To the obtained solution was added 0.3 g. of dibutyl tin maleate, and the solution was applied to a polyester film and dried and cured at 130°C. for 10 minutes to give a pressure sensitive adhesive tape having an adhesive layer of 30 μm. in thickness. The adhesive strength of the tape measured at 20°C. according to JIS C 2107—631 was 580 g./19 mm. This result indicates that the composition of the present invention is useful as an adhesive material.

Reference Example 11

A linear random vinyl copolymer useful as a component (B) having hydrolyzable silyl groups in the side chains and an average molecular weight of 8,000 was prepared by polymerization at 80°C. for 10 hours using 25 parts of styrene, 2 part of N-methylolacrylamide, 20 parts of γ-methacryloyloxypropyltrimethoxysilane, 37 parts of methyl methacrylate, 16 parts of n-butyl acrylate, 100 parts of xylene as a solvent, 2 parts of azobisisobutyronitrile as an initiator and 2 parts of n-dodecylmercaptane as a chain transfer agent.

Examples 11 to 13 and Comparative Example 4

A composition was prepared by thoroughly admixing a polypropylene oxide having $(CH_3O)_2Si(CH_3)CH_2CH_2CH_2O$— groups at 80% of the total ends and an average molecular weight of 8,200 as a component (A), calcium carbonate, titanium dioxide, dioctyl phthalate, hydrogenated caster oil, styrenated phenol as an age resister, dibutyl tin dilaurate as a curing catalyst and the vinyl polymer obtained in Reference Example 11 as a component (B) in prescribed amounts shown in Table 3 in the absence of water. The composition was applied to the adherends shown in Table 4, cured at 20°C. for 7 days and subjected to a hand peeling test to estimate the adhesive property. The adhesive property was estimated according to the following criteria.

○: A cured composition is broken in cohesive failure.

△: A cured composition is broken in cohesive failure in an area of less than 50%.

×: A cured composition is peeled off from an adherend.

The results of the peeling test are shown in Table 4.

Also, the composition in the form of a sheet having a thickness of 3 mm. was cured at 23°C. for 14 days, and the cured sheet was subjected to an exposure test in a sunshine weather-o-meter ("Standard Sunshine Super Long-Life Weather Meter" made by Suga Test Instrument Co., Ltd.).

The results of the weathering test are also shown in Table 4.

TABLE 3

| | Amounts (part) | | | |
|---|---|---|---|---|
| | Ex. 11 | Ex. 12 | Ex. 13 | Com. Ex. 4 |
| Component (A) | 100 | 100 | 100 | 100 |
| Calcium carbonate | 130 | 130 | 130 | 130 |
| Titanium dioxide | 20 | 20 | 20 | 20 |
| Dioctyl phthalate | 40 | 40 | 40 | 40 |
| Styrenated phenol | 1 | 1 | 1 | 1 |
| Hydrogenated caster oil | 4 | 4 | 4 | 4 |
| Dibutyl tin dilaurate | 2 | 2 | 2 | 2 |
| Component (B) | 5 | 10 | 20 | 0 |

TABLE 4

| | Ex. 11 | Ex. 12 | Ex. 13 | Com. Ex. 4 |
|---|---|---|---|---|
| Adhesive property<br>Adherend<br>Glass | ○ | ○ | ○ | ○ |
| Anodic oxidation-treated aluminum | ○ | ○ | ○ | × |
| Electrolytically pigmented aluminum | ○ | ○ | ○ | × |
| Acrylic resin-stoved aluminum | ○ | ○ | ○ | × |
| Aluminum foil | ○ | ○ | ○ | △ |
| Polyvinyl chloride cushion floor sheet | ○ | ○ | ○ | × |
| Polyvinyl chloride-decorated steel plate | ○ | ○ | ○ | × |
| Mortar slate plate | ○ | ○ | ○ | × |
| Color steel plate | ○ | ○ | ○ | × |
| Weatherability<br>Surface deterioration after 2,000 hour sunshine exposure | No change | No change | No change | Fine hair cracks |

Example 14

A nitrogen sealable reactor equipped with a condenser and a stirrer was charged with 100 g. of a polyether having silyl end groups and having a molecular weight of about 8,000, and the temperature was elevated to 130°C. under nitrogen atmosphere. To the reactor was added dropwise over about 1 hour 20 g. of a liquid consisting of 30 parts of styrene, 30 parts of methyl methacrylate, 10 parts of n-butyl acrylate, 30 parts of γ-methacryloyloxypropyltrimethoxysilane and 4 parts of azobisisobutyronitrile. The system became cloudy, but no separation was observed even if allowed to stand.

To 100 g. of the thus prepared polymer were added 3 g. of tin (II) octylate and 1 g. of laurylamine. After thoroughly admixing, the mixture was applied to an aluminum plate and cured at 50°C. and 50% RH for 2 days. After cooling to ordinary temperature, it was attempted to peel off the coating from the aluminum plate. It was not peeled off, but broken. With respect to the polyether, the peeling test was repeated. The polyether coating easily peeled off from the aluminum plate.

Example 15

A nitrogen sealable reactor equipped with a condenser and a stirrer was charged with 100 g. of a polyether having silyl end groups and having a molecular weight of about 8,000, and the temperature was elevated to 130°C. under nitrogen atmosphere. To the reactor was added dropwise over about 3 hours 50 g. of a liquid consisting of 100 parts of ethyl acrylate, 2 parts of n-dodecylmercaptane and 2 parts of azobisisobutyronitrile. The system became slightly cloudy, but no separation was observed.

To 100 g. of the thus obtained polymer was added 1 g. of a hindered amine antioxidant (commercially available under the commercial name "Sanol LS—770" made by Ciba-Geigy AG.), 1 g. of an ultraviolet absorber (commercially available under the commercial name "Tinuvin 327" made by Ciba-Geigy AG.), 3 g. of tin (II) octylate and 1 g. of laurylamine. After thoroughly admixing, the mixture was poured into a frame having a depth of 3 mm. and cured at 50°C. and 50% RH for 2 days to give a sheet-like cured product. Also, a sheet was prepared in the same manner as above except that the starting polyether used as above was employed as a polymer component. These sheets were then subjected to the weathering test in a sunshine weater-o-meter. The sheet prepared from the polyether caused cracks on the surface after 360 hours, but the sheet prepared from the polymer according to the present invention did not show any change even after 540 hours.

Reference Example 12

A one liter pressure autoclave replaced with nitrogen was charged with 320 g. of a diol type polypropylene oxide having an average molecular weight of 3,200 (commercially available under the commercial name "PP—4000" made by SANYO CHEMICAL INDUSTRIES, LTD.). After adding 40.8 g. of NaOH powder (purity: 98%) to the autoclave, the temperature was elevated to 60°C. and the content was agitated at that temperature for 1 hour. Subsequently, 7.76 g. of bromochloromethane was added to the autoclave, and after agitating at 60°C. for 10 hours, 9.2 g. of allyl chloride was added and the reaction was further continued for 10 hours. The reaction mixture was cooled, taken out and placed in an 8 liter separable flask. After adding 1.5 liters of n-hexane and uniformly admixing, 1.5 liters of a 3% sulfuric acid was added and the mixture was agitated for 1 hour. The reaction mixture was allowed to stand for 1 hour, thereby separating into a transparent hexane layer and an aqueous layer whose pH was below 6. The hexane layer was taken out, and hexane was removed by an evaporator to give a polyether (A1) having allyl ether groups at 94% of the total ends and having an average molecular weight of 8,000.

Reference Example 13

A 0.5 liter pressure autoclave was charged with 300 g. of the polyether (Al) obtained in Reference Example 12. After adding 0.3 g. of a 10% solution of chloroplatinic acid in isopropanol and thoroughly admixing, 4.0 g. of methyldimethoxysilane was added, the temperature was elevated to 90°C. and the reaction was carried out for 4 hours at that temperature with agitation.

From the gas chromatography of the reaction mixture, and the infrared absorption spectrum and elemental analysis of the mixture from which low boiling materials were removed, it was confirmed that silyl groups were introduced to 50% of the total ends, thus a polyether (A2) having both allyl groups and silyl groups at the polymer ends useful as a component (A) was obtained.

Example 16

A mixture of 20 g. of the polyether (Al) obtained in Reference Example 12, 70 g. of 2-ethylhexyl acrylate, 20 g. of butyl acrylate, 5.0 g. of vinyl acetate, 2.0 g. of acrylic acid, 0.8 g. of benzoyl peroxide and 50 g. of ethyl acetate was added to a 300 ml. four necked flask. The polymerization was carried out at 80°C. for 6 hours under a nitrogen atmosphere with stirring to give a transparent solution of a polymer.

The thus obtained polymer solution was applied to a polyester film having a thickness of 25 μm. and dried at 110°C. for 2 minutes to give a pressure sensitive adhesive tape with a transparent adhesive layer of 25 μm. in thickness.

The properties of the pressure sensitive adhesive tape are shown in Table 5 together with the results for a commercially available pressure sensitive natural rubber adhesive tape.

It is observed in Table 5 that the pressure sensitive adhesive tape has well balanced excellent tack (initial tackiness), adhesive strength and cohesive strength.

The tack was measured according to the J. Dow type ball tack measuring method (degree of inclination: 30°).

The adhesive strength was measured with respect to a pressure sensitive adhesive tape adhered to a stainless steel plate by a 180° peeling test according to JIS Z 1522 (rate of tension: 300 mm./minute).

The cohesive strength was estimated with respect to a pressure sensitive adhesive tape adhered to a stainless steel plate by measuring the shear distance after 15 minutes according to JIS Z 1524 (adhesion area: 25 mm. × 25 mm., load: 1 kg.).

Comparative Example 5

The procedure of Example 16 was repeated except that the polyether (A1) was not employed, to give a pressure sensitive adhesive tape.

The results are shown in Table 5.

TABLE 5

| | Ex. 16 | Com. Ex. 5 | Natural rubber adhesive |
|---|---|---|---|
| Tack (ball No.) | | | |
| at 5°C | 10 | 2 | 12 |
| at 23°C | 20 | 12 | 20 |
| Adhesive strength (g/cm) | | | |
| at 0°C | 510 | 510 | 490 |
| at 23°C | 460 | 420 | 360 |
| Cohesive strength (mm) | | | |
| at 30°C | 0 | 0 | 0.2 |
| at 60°C | 0 | 0 | falling down 1 min. after |

Examples 17 to 20

A four necked flask was charged with 100 g. of the polyether (A2) obtained in Reference Example 13, and after elevating the temperature to 110°C. under a nitrogen atmosphere, a mixture of the acrylate shown in Table 6 and azobisisobutyronitrile was added dropwise in amounts shown in Table 6 to the flask over 2 hours with stirring. The reaction was further continued for 4 hours with stirring to give a transparent viscous liquid polymer. To 10 g. of the thus prepared polymer was added 5 g. of the reaction product of equimolar amounts of dibutyl tin oxide and dioctyl phthalate. After thoroughly admixing, a transparent pressure sensitive adhesive tape was prepared from the mixture in the same manner as in Example 16.

The properties of the pressure sensitive adhesive tape are shown in Table 6.

Example 21

A four necked flask was charged with 100 g. of the polyether (A2) obtained in Reference Example 13, and after elevating the temperature to 110°C. under a nitrogen atmosphere, a mixture of 97.5 g. of butyl acrylate, 2.5 g. of trimethoxysilylpropyl acrylate and 4.0 g. of azobisisobutyronitrile was added dropwise to the flask over 2 hours with stirring. The reaction was further continued for 4 hours with stirring to give a transparent viscous liquid polymer. From the thus obtained polymer, a transparent pressure sensitive adhesive tape was prepared in the same manner as in Example 17 to 19.

The results are shown in Table 6.

Comparative Example 6

The procedure of Example 21 was repeated except that the polyether (A2) was replaced with ethyl acetate.

The results are shown in Table 6.

TABLE 6

| | Ex. 17 | Ex. 18 | Ex. 19 | Ex. 20 | Ex. 21 | Com. Ex. 6 |
|---|---|---|---|---|---|---|
| Polyether of Ref. Ex. 13 (g.) | 100 | 100 | 100 | 100 | 100 | — |
| Acrylate monomer (g.) | | | | | | |
| Ethyl acrylate | 38 | — | — | — | — | — |
| Butyl acrylate | — | 38 | 95 | — | 97.5 | 97.5 |
| 2-Ethylhexyl acrylate | — | — | — | 38 | — | — |
| Trimethoxysilylpropyl acrylate | — | — | — | — | 2.5 | 2.5 |
| Azobisisobutyronitrile (g.) | 2.0 | 2.0 | 4.0 | 2.0 | 4.0 | 4.0 |

TABLE 6 (continued)

| | Ex. 17 | Ex. 18 | Ex. 19 | Ex. 20 | Ex. 21 | Com. Ex. 6 |
|---|---|---|---|---|---|---|
| Properties of adhesive | | | | | | |
| Tack at 23°C. (ball No.) | 10 | 17 | 14 | 18 | 15 | 6 |
| Adhesive strength at 23°C. (g./cm) | 30 | 50 | 45 | 45 | 40 | 30 |
| Cohesive strength (mm) at 30°C | 0 | 0 | 0 | 0 | 0 | 0 |
| at 60°C | 0 | 0.1 | 0 | 0 | 0 | 0 |

From the results shown in Table 6, it is understood that the pressure sensitive adhesive tapes according to the present invention have excellent tack and cohesive strength.

Also, the pressure sensitive adhesive tapes according to the present invention were adhered to stainless steel plates, and were allowed to stand at 70°C. for 72 hours or exposed in a sunshine weather-o-meter for 200 hours. Change in adhesive strength was scarcely observed, and also the adhesive transfer to the adherend and corrosion of the adherend were not observed at all and, accordingly, it would be understood that the pressure sensitive adhesives according to the present invention are also useful as those for surface protection and masking.

In addition to the ingredients used in the Examples, other ingredients can be used in the Examples as set forth in the specification to obtain substantially the same results.

**Claims**

1. A curing composition which comprises (A) a polyether having at least one functional group in the molecule, said functional group being selected from the group consisting of a reactive silicon-containing group and an olefin group, and (B) a polymer selected from the group consisting of (a) an alkyl acrylate homopolymer in which said alkyl group has 2 to 14 carbon atoms, (b) an acrylate polymer obtained by polymerizing a monomer mixture containing at least 50% by mole of an alkyl acrylate in which said alkyl group has 2 to 14 carbon atoms, and (c) a polymer having at least one reactive silicon-containing group in one molecule obtained by polymerizing a polymerizable monomer, said reactive silicon-containing group being a silicon-containing group capable of condensing by or with moisture, a condensation catalyst or a cross-linking agent.

2. The composition of Claim 1, wherein the main chain of said polyether (A) consists essentially of recurring units of the general formula: $-R^4O-$ wherein $R^4$ is a bivalent hydrocarbon group having 1 to 4 carbon atoms.

3. The composition of Claim 1, wherein said polyether (A) has a molecular weight of 500 to 30 000.

4. The composition of Claim 1, wherein said polymer (c) has been obtained from at least one vinyl monomer of the general formula (1):

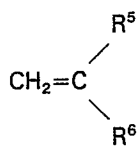

(1)

wherein $R^5$ is a hydrogen atom, a halogen atom or a monovalent aliphatic hydrocarbon group having 1 to 10 carbon atoms, and $R^6$ is a hydrogen atom, a halogen atom, a monovalent aliphatic hydrocarbon group having 1 to 10 carbon atoms, a monovalent aromatic hydrocarbon group having 6 to 10 carbon atoms, an alkenyl group, carboxyl group, an acyloxy group, an alkoxycarbonyl group, nitrile group, pyridyl group, amido group or glycidoxy group.

5. The composition of Claim 4, wherein said vinyl monomer (1) is a monomer having the general formula (3):

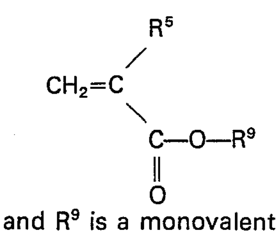

(3)

wherein $R^5$ is as defined in Claim 4, and $R^9$ is a monovalent hydrocarbon group having 1 to 20 carbon atoms.

6. The composition of Claim 1, wherein said polymer (c) has been obtained from a vinyl monomer of the general formula (2):

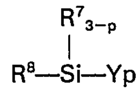

(2)

wherein $R^7$ is a monovalent hydrocarbon group having 1 to 10 carbon atoms selected from an alkyl group, an aryl group and an aralkyl group, $R^8$ is an organic residue having a polymerizable double bond, Y is a hydrolyzable group and p is an integer of 1 to 3.

7. The composition of Claim 6, wherein said vinyl monomer (2) is a monomer having the general formula (4):

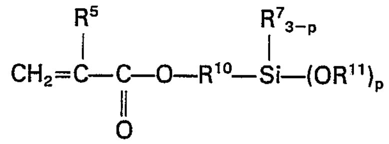

(4)

wherein $R^5$ is as defined in Claim 4, $R^7$ and p are as defined in Claim 6, $R^{10}$ is a bivalent hydrocarbon group having 1 to 10 carbon atoms, and $R^{11}$ is a bivalent hydrocarbon group having 1 to 8 carbon atoms.

8. The composition of Claim 1, wherein said reactive silicon-containing group in polymer (B) is present at the polymer end.

9. The composition of Claim 1, wherein the reactive silicon-containing groups of the polyether (A) and the polymer (B) are alkoxysilyl groups.

10. The composition of Claim 1, wherein said polymer (B) is one prepared in the presence of said polyether (A).

**Patentansprüche**

1. Härtungszusammensetzung die umfaßt (A) einen Polyether mit wenigstens einer funktionellen Gruppe im Molekül, wobei diese funktionelle Gruppe ausgewählt wird aus der Gruppe, die aus einer reaktiven Silicium-enthaltenden Gruppe und einer Olefingruppe besteht, und (B) ein Polymer, ausgewählt aus der Gruppe, die besteht aus (a) einem Alkylacrylathomopolymer, in dem diese Alkylgruppe 2 bis 14 Kohlenstoffatome hat, (b) einem Acrylatpolymer, erhalten durch Polymerisation einer Monomermischung mit wenigstens 50 Mol-% eines Alkylacrylats, in dem diese Alkylgruppe 2 bis 14 Kohlenstoffatome hat, und (c) einem Polymer mit wenigstens einer reaktiven Silicium-enthaltenden Gruppe in einem Molekül, erhalten durch Polymerisation eines polymerisierbaren Monomers, wobei diese reaktive Silicium enthaltende Gruppe eines Silicium-enthaltende Gruppe ist, die zur Kondensation in der Lage ist durch oder mit Feuchtigkeit, einem Kondensationskatalysator oder einem Vernetzungsmittel.

2. Zusammensetzung nach Anspruch 1, worin die Hauptkette des genannten Polyethers (A) im wesentlichen aus wiederkehrenden Einheiten besteht mit der allgemeinen Formel: $—R^4O—$ wobei $R^4$ eine bivalente Kohlenwasserstoffgruppe mit 1 bis 4 Kohlenstoffatomen ist.

3. Zusammensetzung nach Anspruch 1, worin der genannte Polyether (A) ein Molekulargewicht von 500 bis 30 000 hat.

4. Zusammensetzung nach Anspruch 1, worin das genannte Polymer (c) erhalten wird aus wenigstens einem Vinylmonomer der allgemeinen Formel (1):

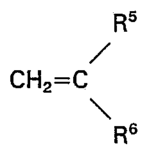

(1)

worin $R^5$ ein Wasserstoffatom ist, ein Halogenatom oder eine monovalente aliphatische Kohlenwasserstoffgruppe mit 1 bis 10 Kohlenstoffatomen, und $R^6$ ein Wasserstoffatom, ein Halogenatom, eine monovalente aliphatische Kohlenwasserstoffgruppe mit 1 bis 10 Kohlenstoffatomen, eine monovalente aromatische Kohlenwasserstoffgruppe mit 6 bis 10 Kohlenstoffatomen, eine Alkenylgruppe, eine Carboxylgruppe, eine Acyloxygruppe, eine Alkoxycarbonylgruppe, Nitrilgruppe, Pyridylgruppe, Amidogruppe oder glycidoxygruppe ist.

5. Zusammensetzung nach Anspruch 4, worin genanntes Vinylmonomer (1) ein Monomer mit der allgemeinen Formel (3) ist:

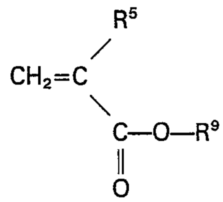

(3)

worin $R^5$ wie in Anspruch 4 definiert ist, und $R^9$ eine monovalente Kohlenwasserstoffgruppe mit 1 bis 20 Kohlenstoffatomen ist.

6. Zusammensetzung nach Anspruch 1, worin genanntes Polymer (c) erhalten wurde aus einem Vinylmonomer mit der allgemeinen Formel (2):

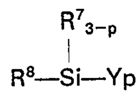

(2)

worin $R^7$ eine monovalente Kohlenwasserstoffgruppe mit 1 bis 10 Kohlenstoffatomen ist, ausgewählt aus einer Alkylgruppe, einer Arylgruppe und einer Aralkylgruppe, $R^8$ ein organischer Rest mit einer polymerisierbaren Doppelbindung ist, Y eine hydrolysierbare Gruppe ist und p eine ganze Zahl von 1 bis 3 ist.

7. Zusammensetzung nach Anspruch 6, worin genanntes Vinylmonomer (2) ein Monomer mit der allgemeinen Formel (4) ist:

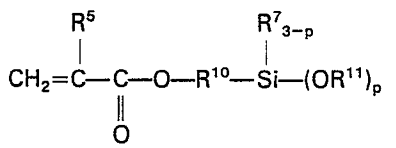

(4)

worin $R^5$ wie in Anspruch 4 definiert ist, $R^7$ und p wie in Anspruch 6 definiert sind, $R^{10}$ eine bivalente Kohlenwasserstoffgruppe mit 1 bis 10 Kohlenstoffatomen ist und $R^{11}$ eine bivalente Kohlenwasserstoffgruppe mit 1 bis 8 Kohlenstoffatomen ist.

8. Zusammensetzung nach Anspruch 1, worin genannte reaktive Silicium-enthaltende Gruppe in Polymer (B) sich am Polymerende befindet.

9. Zusammensetzung nach Anspruch 1, worin die reaktiven Silicium-enthaltenden Gruppen des Polyethers (A) und des Polymers (B) Alkoxysilylgruppen sind.

10. Zusammensetzung nach Anspruch 1, worin dieses Polymer (B) in Gegenwart von diesem Polyether (A) hergestellt wird.

**Revendications**

1. Composition réticulable qui comprend (A) un polyéther comportant au moins un groupe fonctionnel dans la molécule, ledit groupe fonctionnel étant choisi dans le groupe constitué par un groupe réactif contenant du silicium et un groupe oléfinique, et (B) un polymère choisi dans le groupe constitué par (a) un homopolymère d'acrylate d'alkyle dans lequel ledit groupe alkyle possède 2 à 14 atomes de carbone, (b) un polymère d'acrylate obtenu par polymérisation d'un mélange de monomères contenant au moins 50% en moles d'un acrylate d'alkyle, dans lequel ledit groupe alkyle possède 2 à 14 atomes de carbone, et (c) un polymère comportant au moins un groupe réactif contenant du silicium dans une molécule, obtenu par polymérisation d'un monomère polymérisable, ledit groupe réactif contenant du silicium étant un groupe contenant du silicium capable de se condenser, sous l'action de, ou avec l'humidité, un catalyseur de condension ou un agent de réticulation.

2. Composition selon la revendication 1, dans laquelle la chaîne principale dudit polyéther (A) est essentiellement constituée de motifs récurrents de formule générale $-R^4O-$ dans laquelle $R^4$ est un groupe hydrocarboné divalent possédant 1 à 4 atomes de carbone.

3. Composition selon la revendication 1, dans laquelle ledit polyéther (A) a un poids moléculaire de 500 à 30000.

4. Composition selon la revendication 1, dans laquelle ledit polymère (c) a été obtenu à partir d'au moins un monomère vinylique de formule générale (1):

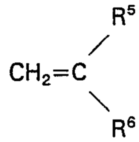

(1)

dans laquelle $R^5$ est un atome d'hydrogène, un atome d'halogène ou un groupe hydrocarboné aliphatique

monovalent possédant 1 à 10 atomes de carbone, et $R^6$ est un atome d'hydrogène, un atome d'halogène, un groupe hydrocarboné aliphatique monovalent possédant 1 à 10 atomes de carbone, un groupe hydrocarboné aromatique monovalent possédant 6 à 10 atomes de carbone, un groupe alcényle, un groupe carboxyle, un groupe acyloxy, un groupe alcoxycarbonyle, un groupe nitrile, un groupe pyridyle, un groupe amino ou un groupe glycidoxy.

5. Composition selon la revendication 1, dans laquelle ledit monomère vinylique (1) est un monomère répondant à la formule générale (3):

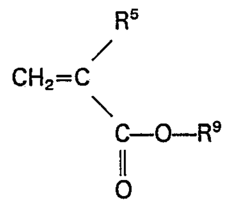

(3)

dans laquelle $R^5$ est tel que défini dans la revendication 4, et $R^9$ est un groupe hydrocarboné monovalent possédant 1 à 20 atomes de carbone.

6. Composition selon la revendication 1, dans laquelle ledit polymère (c) a été obtenu à partir d'un monomère vinylique de formule générale (2):

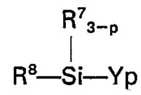

(2)

dans laquelle $R^7$ est un groupe hydrocarboné monovalent possédant 1 à 10 atomes de carbone, choisi parmi un gorupe alkyle, un groupe aryle et un groupe aralkyle, $R^8$ est un résidu organique possédant une double liaison polymérisable, Y est un groupe polymérisable et p est un entier de 1 à 3.

7. Composition selon la revendication 6, dans laquelle ledit monomère vinylique (2) est un monomère répondant à la formule générale (4):

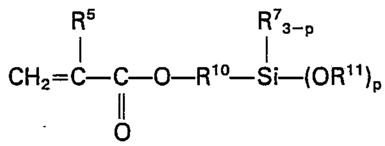

(4)

dans laquelle $R^5$ est tel que défini dans la revendication 4, $R^7$ et p sont tel que définis dans la revendication 8, $R^{10}$ est un groupe hydrocarboné divalent possédant 1 à 10 atomes de carbone et $R^{11}$ est un groupe hydrocarboné divalent possédant 1 à 8 atomes de carbone.

8. Composition selon la revendication 1, dans laquelle ledit groupe réactif contenant du silicium, dans le polymère (B), est présent à l'extrémité du polymère.

9. Composition selon la revendication 1, dans laquelle les groupes réactifs contenant du silicium, du polyéther (A) et du polymère (B), sont des groupes alcoxysilyle.

10. Composition selon la revendication 1, dans laquelle ledit polymère (B) est un polymère préparé en présence dudit polyéther (A).